(19) Europäisches Patentamt

European Patent Office

Office européen des brevets

(11) **EP 0 858 489 B1**

(12) **EUROPEAN PATENT SPECIFICATION**

(45) Date of publication and mention
of the grant of the patent:
**06.12.2000 Bulletin 2000/49**

(21) Application number: **96930155.5**

(22) Date of filing: **02.09.1996**

(51) Int Cl.[7]: **C09J 123/16**

(86) International application number:
**PCT/EP96/03855**

(87) International publication number:
**WO 97/15636 (01.05.1997 Gazette 1997/19)**

(54) **SPRAYABLE ETHYLENE BASED HOT MELT ADHESIVES**

SPRÜHBARER SCHMELZKLEBSTOFF AUF DER BASIS VON ETHYLEN-POLYMERISATEN

ETHYLENE PULVERISABLE, A BASE D'ADHESIFS THERMOFUSIBLES

(84) Designated Contracting States:
**DE FR GB IT NL**

(30) Priority: **20.10.1995 GB 9521494**

(43) Date of publication of application:
**19.08.1998 Bulletin 1998/34**

(73) Proprietor: **EXXON CHEMICAL PATENTS INC.**
**Linden, New Jersey 07036-0710 (US)**

(72) Inventors:
• **FAISSAT, Michel, Louis**
**B-1410 Waterloo (BE)**

• **ROBBERECHTS, Herman, Diederik, Marie, Emiel**
**B-1880 Nieuwenrode (BE)**

(74) Representative: **Dew, Melvyn John et al**
**Exxon Chemical Europe Inc.**
**Law Technology**
**P.O.Box 105**
**1830 Machelen (BE)**

(56) References cited:
**EP-A- 0 442 045          WO-A-92/05217**
**WO-A-92/12212          WO-A-94/10256**

**Description**

Field of the Invention

This invention relates to sprayable hot melt adhesives based upon ethylene copolymers and methods to apply these hot melt adhesives, particularly in disposable packaging and assembly applications and articles produced by such methods.

Background of the Invention.

Sprayable hot melt adhesives are desirable for the economic and commercial reasons that they can be thinly, evenly and quickly coated onto a substrate, saving in both time and material, and that they allow better substrate coverage per quantitiy of adhesive. Typical sprayable hot melt adhesives comprise an amorphous copolymer, generally a butene based copolymer of a styrene based block copolymer, combined with a tackifier. For example, U.S. Patent 4,959,207 discloses sprayable hot melt adhesives of butene copolymers having up to 5.5 to 10 weight % ethylene, tackifier and amorphous diluent having a softening point greater than 90 °C. Similarly, EP 442 045 A2 discloses sprayable hot melt adhesives of amorphous polyalphaolefins having 3 to 75 weight % $C_4$ to $C_{10}$ alpha-olefin, 25 to 95 weight % propylene 0 to 20 weight % ethylene. In the past attempts have been made to produce sprayable ethylene α-olefin copolymer based hot melt adhesives. However, these blends were unsuccessful because the polymer would coagulate at the nozzle head or give uneven coating patterns of spots of unequal size rather than a regular even coating pattern. JP- 4180981 A addresses the problem of coagulation at the nozzle head by disclosing a hot melt adhesives of wax, bivalent phenol stabilizer, partially maleated or fumarated rosin ester tackifier and ethylene copolymer of ethylene mono-carboxylic vinyl ester/acrylic ester and suggesting that they will not clog the nozzle head when sprayed. However, when actually sprayed these hot melt adhesives will not produce a regular even pattern.

Similarly, WO 94 10256 discloses ethylene copolymer blends for hot melt adhesives. However these blends are not suggested for use in spraying applications.

Thus, this invention provides new sprayable hot melt adhesive compositions based upon ethylene copolymers.

Summary of the Invention.

This invention relates firstly to sprayable hot melt adhesive compositions comprising: from 30 to 65 wt-% of a tackifier and an ethylene polymer having 5 to 40 weight % comonomer, based upon the weight of the copolymer; a CDBI of 50% or greater; a melt index of 15 dg/min or more; and an Mw/Mn of 4 or less and secondly,to a process for spraying ethylene homopolymers and copolymers comprising selecting a hot melt adhesive composition as described above and atomizing, spiral spraying or melt blowing the hot melt adhesive selected onto a substrate.

Detailed Description

In a preferred embodiment, this invention relates to sprayable hot melt adhesive compositions comprising: a tackifier, and an ethylene polymer having 5 to 30 weight % of a comonomer, based upon the weight of the copolymer; a CDBI of 60% or greater; a melt index of 15 or more; and an Mw/Mn of 4 or less.

Preferred ethylene polymers that can be used in the practice of this invention include ethylene homopolymers and copolymers. The copolymers have 5 to 40 weight %, preferably from 5 to 30 weight %, more preferably from 10 to 25 weight %, based upon the weight of the copolymer, of one or more comonomers. Preferred comonomers may be a $C_3$ to $C_{40}$ linear, branched or cyclic alpha-olefin. In a preferred embodiment the comonomer is a $C_3$ to $C_{20}$ alpha olefin, and in a particularly preferred embodiment the comonomer is butene-1, pentene-1, hexene-1, heptene-1, octene-1, nonene-1, decene-1, undecene-1, dodecene-1, 3,5,5-trimethyl hexene-1, 3-methylpentene-1, 4-methylpentene-1 and the like. Terpolymers of ethylene with two or more of the above monomers are also useful in the practice of this invention.

The ethylene polymers used in this invention have a Composition Distribution Breadth Index (CDBI) of 50% or more, preferably of 60% or more, even more preferably of 70 % or more, even more preferably of 80 % or more. CDBI is a measure of the uniformity of comonomer distribution within a given sample and is measured according to the method described in PCT publication WO 93-03093, published February 18, 1993. A homopolymer has a CDBI of 100%.

The ethylene polymers used in this invention have an Mw/Mn of 4 or less, preferably 3 or less, even more between 2 and 1.

The ethylene polymers used in this invention have a melt index as measured by ASTM 1238, condition E, of 15 dg/min or more, preferably 30 dg/min or more, more preferably between 100 and 10,000 dg/min.

In another preferred embodiment, the ethylene polymers of this invention are at least 50 % amorphous, preferably between 60 and 100% amorphous, even more preferably between 70 and 100% amorphous. Percent amorphous content is determined by Differential Scanning Calorimetry measurement according to ASTM E 794-85.

Preferred tackifier that may be blended with the ethylene copolymers described above are those typically used in the art. Examples include, but are not limited to, aliphatic hydrocarbon resins, aromatic modified aliphatic hydrocarbon resins, hydrogenated polycyclopentadiene resins, polycyclopentadiene resins, gum rosins, gum rosin esters, wood rosins, wood rosin esters, tall oil rosins, tall oil rosin esters, polyterpenes, aromatic modified polyterpenes, terpene phenolics, aromatic modified hydrogenated polycyclopentadiene resins, hydrogenated aliphatic resin, hydrogenated aliphatic aromatic resins, hydrogenated terpenes and modified terpenes, and hydrogenated rosin esters. In a preferred embodiment the tackifier is hydrogenated. In another preferred embodiment the tackifier is non-polar. (Nonpolar meaning that the tackifier is substantially free of monomers having polar groups. Preferably the polar groups are not present, however if they are preferably they are not present at more that 5 weight %, preferably not more that 2 weith %, even more preferably no more than 0.5 weight %.) In a preferred embodiment the tackifier has a softening point (Ring and Ball, as measured by ASTM E-28) of 80 °C to 140 °C, preferably 100 °C to 130 °C.

The tackifier is present at 30 weight % to 65 weight % based upon the weight of the blend, preferably 40 weight % to 60 weight %. In a preferred embodiment the tackifier can be a blend of two or more tackifiers. In another preferred embodiment the tackifier comprises a blend of two or more hydrogenated polycyclopentadiene resin. The 5000 series of ESCOREZ™ resins are preferred tackifiers.

The ethylene polymer and the tackifier may be blended together by methods known in the art. For example the ethylene copolymer and the tackifiers can be physically admixed, they can be melt blended, they can be master batched, they can be solvent blended and the like. In one non-limiting example, the polymer and the tackifier are melted in a Z-blade mixer or in a Brabender twin screw extruder and blended under high shear conditions. Their blend components should be chosen so that a final blend viscosity of 20,000 mPaS or less is obtained, preferably 15,000 or less, even more preferably 10,000 or less, even more preferably 8,000 or less even more preferably between 500 and 8000. The range of 500 to 5000 mPa.s at 180°C is ideal for spraying a low coating weight and wide spray pattern (spiral, net like web, or nebulized droplets).

In addition to the polymer and the tackifier, one can add another polymer ("second polymer"). Preferred polymers include any of the polymers described above as ethylene polymers and polymers of ethylene and a polar monomer. The polar monomer is preferably present at up to 45 weight %, even more preferably up to 0.5 to about 33 weight %. Preferred polar comonomers may be an ester, a carboxylic acid, an acrylic, and acrylic ester, a vinyl ester or the like. In a preferred embodiment the polar monomer is a vinyl ester or an alkyl acrylic ester, such as vinyl acetate, acrylic acid, methyl acrylate, ethyl acrylate, propyl acrylate, butyl acrylate, methacrylic acid, ethacrylic acid, and derivatives thereof.

The second polymer may be present at up to 50 weight %, preferably 0.1 weight % to 30 weight %. A preferred class of polymer to be added to the composition is an ethylene/propylene/butene terpolymer.
Ethylene/propylene/ butene terpolymers are not typically sprayable, however, when blended with the ethylene polymers described above, they can be formed into sprayable compositions. Examples of preferred ethylene/propylene/butene terpolymers are VESTOPLAST™ 708, VESTOPLAST™ 750, and VESTOPLAST™ 408 which are commercially available from Hüls. The ethylene/propylene/butene terpolymer is preferably present at up to 50 weight %, even more preferably at 0.1 weight % to 20 weight %, even more preferably at 0.1 weight % to 15 weight %.

Another optional component of the ethylene polymer/tackifier composition is a plasticizer. Preferred plasticizers include mineral oils, polybutenes, phthalates and the like. Particularly preferred plasticizers include phthalates such as diisoundecyl phthalate (DIUP), diisononylphthalate (DINP), dioctylphthalates (DOP) and the like. Another optional component of the ethylene polymer/tackifier composition is a low molecular weight product such as wax, oil or low Mn polymer, (low meaning below Mn of 5000, preferably below 4000, more preferably below 3000, even more preferably below 2500). Preferred oils include aliphatic, olefinic or napthenic oils. Preferred low Mn polymers include polymers of lower alpha olefins such as propylene, butene, pentene, hexene and the like. A particularly preferred polymer includes polybutene having an Mn of less than 1000. An example of such a polymer is available under the trade name PARAPOL™ 950 from Exxon Chemical Company. PARAPOL™ 950 is an liquid polybutene polymer having an Mn of 950 and a kinematic viscosity of 220cSt at 100 °C, as measured by ASTM D 445.

The blend may then be applied directly to a substrate as a hot melt adhesive or may be sprayed thereon. Spraying is defined to include atomizing, spiral spray controlled fiberization and melt blown techniques. Melt blown techniques are defined to include the methods described in U.S. patent 5,145,689 or any process where air streams are used to break up filaments of the extrudate and then used to deposit the broken filaments on a substrate. In general, melt blown techniques are processes that use air to spin hot melt adhesive fibers and convey them onto a substrate for bonding. Fibers sizes can easily be controlled from 20-200 microns by changing the melt to air ratio. Few, preferably no, stray fibers are generated due to the inherent stability of adhesive melt blown applicators. Under UV light the bonding appears as a regular, smooth, stretched dots pattern. Atomization is a process that uses air to atomize hot melt adhesive into very small dots and convey them onto a substrate for bonding.

The blend may also be applied to a substrate using conventional techniques for applying a hot melt adhesive to a substrate. Examples include hot melt jet nozzle coating, hot melt multiline coating, hot melt slot die coating, hot melt wheel coating, hot melt roller coating, and solvent roller coating.

In a preferred embodiment the blend is applied to a substrate using a spiral spray. Spiral spray is a method used for producing a filamentary spiral application. In one example the hot melt adhesive and spray air are mixed inside the nozzle, eliminating external influences on the spray pattern. In another example, the hot melt adhesive is drawn into a small fiber by high-velocity air jets. The fiber is then rotated by jets until it contacts the substrate, producing a helical pattern from the single strand of adhesive.

The sprayed hot melt adhesives of this invention can be used for disposable diaper and napkin chasis construction, elastic attachment in disposable goods converting, packaging, labelling and other assembly applications. Particularly preferred applications include: baby diaper leg elastic, diaper frontal tape, diaper standing leg cuff, diaper chassis construction, diaper core stabilization, diaper liquid transfer layer, diaper outer cover lamination, diaper elastic cuff lamination, feminine napkin core stabilization, feminine napking adhesive strip, industrial filtration bonding, industrial filter material lamination, filter mask lamination, surgical gown lamination, surgical drape lamination, and perishable products packaging.

Tests and Materials.

**CDBI** was measured according to the procedure described in PCT publication WO 93-03093, published February 18, 1993.

**Melt Index** (MI) was measured according to ASTM 1238, condition E (dg/min).

**Density** was measured according to ASTM D-792 (g/cc).

**T-Peel** was measured ASTM D1876-72 (20 mm wide test specimens and 2 inch/min (5.08 cm/ min) head speed)

**Viscosity** was measured according to ASTM D 3236 at 180 °C (mPaS)

**Penetration** was measured according to ASTM D1321-86.

**SAFT** (Shear Adhesion Fail Temperature) was measured by adhereing a coated polyethylene strip of 25 mm width to stainless steel via press lamination with a contact area of 12.5mm x 25mm, hanging samples in an oven held at 25 ° C and suspending a 500 gram weight from the bottom of the strip. The temperature is raised at 0.4 °C/min and the bond failure temperature is measured. The SAFT is the average of three test samples. (°C).

**Hot Shear** was measured by suspending a 1000 gram weight from a 25 mm wide strip of polyethylene film coated with the adhesive formulation which is adhered with press lamination to a stainless steel plate with a contact area of 12.5mm x 25mm. The sample is placed in a ventilated oven at 40 °C. Every 30 minutes the temperature is increased by 10°C. Time and temperature are recorded until stress failure occurs. Typically these tests are made and recorded individually to determine the reliability of the holding power. (min, ° C)

**Sprayability** was measured on a CT 325 Meltex coater under the conditions listed in Example 1. Perfect spiral is shown in figure 1, acceptable spiral is shown in figure 2 and no spiral but unequal spots is shown in figure 3.

**Static shear** was measured according to hot shear test set-up described above, but temperature is maintained constant at 50 °C. Time is recorded until stress failure occurs.

**Molecular weights** (Mw and Mn) were measured by Gel Permeation Chromotography, unless otherwise noted, using a Waters 150-CV Gel Permeation Chromatograph equipped with a differential refractive index (DRI) detector and polystyrene standards. Polymer samples were dissolved in trichlorobenzene solvent at 165 °C and the solutions were run at 145 °C using three Shodex GPC AT-80 M/S columns in series. This general technique is discussed in "Liquid Chromotography of Polymers and Related Materials III'" J. Cazes Ed., Marcel Decker, 1981, page 207. No corrections for column spreading were employed; however, data on generally accepted standards, e.g. National Bureau of Standards Polyethylene 1475, demonstrated a precision with 0.1 units for Mw/Mn which was calculated from elution times. The numerical analyses were performed using Expert Ease™ software available from Waters Corporation.

**Melt Flow Rate** (MFR) was measured according to ASTM_D 1238 (10 kg, 230 °C)

**EXACT™ 4038** is an ethylene butene copolymer having an MI of 125 dg/min, a density of 0.885 g/cc, a butene content of 19 weight percent based upon the weight of the copolymer, an Mw/Mn of 2.06 and a CDBI over 50%, and a crystallinity of about 16%.

**EXACT™ 4044** is an ethylene hexene copolymer having an MI of 16.5 dg/min, a density of 0.895 g/cc, a hexene content of 20 weight %, an Mw/Mn of 1.97 and a CDBI over 50 %, and a crystallinity of about 24%.

**EXACT™ 4023** is an ethylene butene copolymer having an MI of 35 dg/min, a density of 0.882 g/cc, a butene content of 21 weight %, an Mw/Mn of 2.21 and a CDBI over 50%, and a crystallinity of about 13%.

**PARAPOL™ 950** is a liquid polybutene having an Mn of about 950 and a Kinematic viscosity of 220 cst at 100 °c, as measured by ASTM D445.

**ESCOREZ™ 5380** is a hydrogenated polycyclopentadiene tackifier having a softening point of 85 °C.

**ESCOREZ™ 5320** is a hydrogenated polycyclopentadiene tackifier having a softening point of 125 °C.

**ESCORENE™ UL 40028** is an ethylene/vinyl actetate copolymer having an MI of 400 dg/min, and a VA content of 28%.

**VESTOPLAST™750** is an ethylene/propylene/butene copolymer available from Huls, having a density of 0.87 and an MV of 70,000.

**VESTOPLAST ™708** is an ethylene/propylene/butene copolymer available from Huls, having a density of 0.87 and an MV of 45,000.

**DIUP** is diisoundecyl pthalate

**Meltex CT 325** is a coating machine from Nordson/Meltex.

**EP 34-6SD** spray head is a spiral spray coating head.

**IRGANOX™ 1010** is an antioxidant available form Ciba Geigy described in U.S. Patents 3,285,855 and 3,644,482.

**Examples**

Several diffferent ethylene copolymers were blended with one or more tackifiers according to the following procedure. In a Z-blade mixer with the rotorblades in Z-shape, 204 grams of the ethylene copolymer and 276 grams of tackifying resin were blended incrementally at 180 °C, under nitrogen, until the total volume of the polymer and tackifier were mixed. The components were allowed to mix for 10 minutes, then the parapol DIUP, etc, if any, were added. The blend was then mixed for another 50 minutes and poured into a release paper container. Several tests were performed on the various blends according to the procedures described above and the blends were sprayed using a CT 325 Meltex coater under the following conditions:

Melt section temp.: 170°c
Hoze temp.; 175°c
Nozzle temp.: 175°c
Air temp.: 200°c
12 notches spiralhead
Nip roll: 1 bar
Brake roll 1: 0-0.5 bar
Brake roll 2: 0-0.5 bar
Unwind 1: 0-0.5 bar
Lamination roll 1: 4 bar
Lamination roll 2: 4 bar
Unwind 2: 0-0.5 bar
Cooling Unit: 15-16°c
Webspeed: 125 m/min

pumpspeed between 40-50 rpm on TACHO to have a coating weight of ± 0.5 g/lm for a spiral diameter of 4-4.5 cm

The polymers, blend components and data are reported in Tables 1 to 4.

Symbols in the Tables

1 = g/spiral spray ±4cm, Adhesive spiral sprayed onto a nonwoven coverstock of thermally bonded polypropylene and then bonded to a polyethylene substrate.

2 = Adhesive coated onto polyethylene substrate then bonded to another polyethylene substrate.

3= adhesive meltblown onto a nonwoven coverstock of thermally bonded polypropylene then bonded to polyethylene substrate.

Perfect blownability means that the adhesive was deposited evenly with the same coating weight left to right on the substrate.

AF = adhesive failure, CF = cohesive failure.

Perfect spiral means that the spiral is a wide and regular spiral of about 4 cm.

TABLE 1

|  | Blend A | Blend B | Blend C | Blend D |
|---|---|---|---|---|
| Exact 4038 | 50 | 40 | 34 | - |
| Exact 4044 | - | - | - | 40 |
| Escorez 5380 | 38 | 43 | 46 | 40 |
| Parapol 950 | 12 | 17 | 20 | 20 |
| Irganox 1010 | 0.5 | 0.5 | 0.5 | 0.5 |
| Sprayability 4-4.5 cm spiral width | acceptable spiral | good spiral | perfect spiral | no spiral but unequal spots |
| Sprayability 2-2.5 cm spiral width | perfect spiral | perfect spiral | perfect spiral | no spiral but unequal spots |
| T-Peel NWC/PE @ R.T.[1] | 215 g/spray | 475 g/spray | 540 g/spray | - |
| Failure mode | adhesive | adhesive | adhesive |  |
| T-Peel NWC/PE @ 40 °C[1] | 40 g/spray | 60 g/spray | 50 g/spray |  |
| Failure mode | adhesive | adhesive | adhesive |  |
| blend viscosity @ 180 °C (mpas) | 13700 | 6900 | 3650 | 22750 |
| Hot shear (min,°C) |  |  | 11,50 11,50 13,50 |  |
| Static shear @ 50 °C (min) |  |  | 11 |  |
| SAFT (°C) |  |  | 53/53/51 |  |
| Penetration @ RT (mm) |  |  | 3.12 |  |
| Penetration @ 40 °C |  |  | 6.72 |  |
| T-Peel PE/PE @ R.T.[2] (g/cm) |  |  | 1285 |  |
| Failure mode |  |  | cohesive |  |
| T-Peel PE/PE @ 40°C[2] (g/cm) |  |  | 315 |  |
| Failure mode |  |  | cohesive |  |

TABLE 2

|  | Blend E | Blend F | Blend G |
|---|---|---|---|
| Exact 4038 | 20 | 15 | - |
| Vestoplast 750 |  |  | 15 |
| Vestoplast 708 |  | 35 | 35 |
| Escorene UL 40028 | 30 | - | - |
| Escorez 5380 | 38 | 38 | 38 |
| Parapol 950 | 12 | 12 | 12 |
| Irganox 1010 | 0.5 | 0.5 | 0.5 |
| Sprayability 4-4.5 cm spiral width | acceptable spiral | acceptable spiral | no spiral but unequal spots |
| Sprayability 2-2.5 cm spiral width | perfect spiral | perfect spiral | no spiral/unequal spots |
| T-Peel NWC/PE @ R.T.[1] | 655 g/spray | 480 g/spray | - |

TABLE 2 (continued)

|  | Blend E | Blend F | Blend G |
|---|---|---|---|
| Failure mode | adhesive | adhesive | - |
| T-Peel NWC/PE @ 40 °C[1] | 120 g/spray | 160 g/spray | - |
| Failure mode | adhesive | adhesive |  |
| blend viscosity @ 180 °C (mpas) | 8400 | 3920 | 3000 |
| Hot shear (min,°C) |  |  | 12,50 11.50 13.50 |
| Static shear @ 50 °C(min) |  |  | 13 |
| SAFT(°C) |  |  | 60/60/60 |
| Penetration (mm) @ R.T. |  |  | 2.02 |
| Penetration (mm) @ 40°C |  |  | 4.72 |
| T-Peel PE/PE[2] (g/cm)@ R.T. |  |  | 590 AF |
| Blownability |  |  | unacceptable |
| T-Peel PE/PE[2] (g/cm)@ 40°C |  |  | 385 AF |

TABLE 3

|  | Blend H | Blend I | Blend J |
|---|---|---|---|
| Exact 4023 |  |  | 24 |
| Exact 4038 | 34 |  |  |
| Exact 4044 |  | 24 |  |
| Escorez 5380 | 23 | 28 | 28 |
| Escorez 5320 | 23 | 28 | 28 |
| Parapol 950 | 20 | 20 | 20 |
| Irganox 1010 | 0.5 | 0.5 | 0.5 |
| Sprayability 4-4.5 cm spiral width | perfect spiral | not good | perfect spiral |
| Sprayability 2-2.5 cm spiral width | perfect spiral | perfect for 1 cm | perfect spiral |
| T-Peel NWC/PE @ R.T.[1] | 875 g/spray | 120 g/spray | 610 g/spray |
| Failure mode | adhesive | adhesive | adhesive |
| T-Peel NWC/PE @ 40 °C[1] | 340 g/spray | 350 g/spray | 400 g/spray |
| Failure mode | adhesive | adhesive | adhesive |
| blend viscosity @ 180 °C (mpas) | 4500 | 11720 | 5660 |
| Hot shear (min, °C) | 7,60 7,60 5,60 | 16,70 18,70 | 5,60 5,60 5,60 |
| Static shear @ 50 °C(min) | 25 | 298 | 21 |
| SAFT (°C) | 60/60/60 | 72/72/71 | 60/59/59 |
| Penetration (mm) @ R.T. | 2.73 | 0.90 | 2.06 |
| Penetration (mm) @ 40 °C | 5.79 | 2.75 | 7.14 |
| T-PEEL PE/PE[2] (g/cm)@ R.T. | 1340 CF | 2145 CF | 1515 CF |
| T-PEEL PE/PE[2] (g/cm)@ 40°C | 425 CF | 1100 AF/CF | 865 CF |
| Blownability | perfect |  | perfect |
| T-PEEL NWC/PE[3] "Melt Blown" (N/25mm)@ R.T. | 2.35 AF |  | 3.50 T |

TABLE 3   (continued)

|  | Blend H | Blend I | Blend J |
|---|---|---|---|
| T-PEEL NWC/PE[3] "Melt Blown" (N/25mm)@ 40°C | 0.65 AF |  | 2.15 AF |

TABLE 4

|  | Blend K | Blend L |
|---|---|---|
| Exact 4038 | 25 | 34 |
| Escorez 5320 | 55 | 46 |
| Parapol 950 | 20 | 20 |
| Irganox 1010 | 0.5 | 0.5 |
| Sprayability 4-4.5 cm spiral width | perfect spiral | perfect spiral |
| Sprayability 2-2.5 cm spiral width | perfect spiral | perfect spiral |
| T-Peel NWC/PE @ R.T.[1] | 600 g/spray | 650 g/spray |
| Failure mode | adhesive | adhesive |
| T-Peel NWC/PE @ 40 °C[1] | 350 | 280 g/spray |
| Failure mode | adhesive | adhesive |
| blend viscosity @ 180 °C (mpas) | 2800 | 5680 |
| Hot shear(min,°C) | 13,60 11,60 7,60 | 16,60 13,60 16,60 |
| Static shear @ 50 °C(min) | >3000 | 117 |
| SAFT(°C) | 66/65/63 | 62/64/63 |
| Penetration (mm)@ R.T. | 1.10 | 1.70 |
| Penetration (mm) @ 40 °C | 5.07 | 5.38 |
| T-PEEL PE/PE[2] (g/cm)@ R.T. | 1425 CF | 1350 CF |
| T-PEEL PE/PE[2] (g/cm)@ 40°C | 715 CF | 660 CF |
| Blownability | perfect | perfect |
| T-PEEL NWC/PE[3] "Melt Blown" (N/25mm)@ R.T. | 0.70 AF | 1.80 AF |
| T-PEEL NWC/PE[3] "Melt Blown" (N/25mm)@ 40°C | 1.25 AF | 0.95 AF |

**Claims**

1. A process for spraying ethylene homopolymers and copolymers comprising selecting a hot melt adhesive composition comprising: from 30 to 65 wt% of a tackifier and an ethylene polymer having 5 to 40 weight % comonomer, based upon the weight of the copolymer; a CDBI of 50% or greater; an MI of 15 dg/min or more; and an Mw/Mn of 4 or less, and

   atomizing, spiral spraying or melt blowing the hot melt adhesive selected onto a substrate.

2. The process of claim 1 wherein the comonomer is a $C_3$ to $C_{40}$ linear, cyclic or branched alpha-olefin, preferably butene, hexene and/or octene, preferably present at up to 40 weight %.

3. The process of any of the above claims further comprising a second polymer.

4. The process of claim 3 wherein the second polymer is an ethylene/propylene/butene terpolymer.

**5.** The process of claim 3 or 4 wherein the second polymer is present at up to 50 weight percent based upon the weight of the first and second polymers.

**6.** The process of any of the above claims wherein plasticizer is additionally present.

**7.** The process of claim 6 wherein the plasticizer is a pthalate, preferably diisoundecyl pthalate.

**8.** The process of any of the above claims wherein an oil or wax is additionally present, preferably the oil is an olefinic or napthenic oil.

**9.** The process of any of the above claims wherein a polybutene copolymer having an Mn of less than 2500 is additionally present.

**10.** The process of any of the above claims where the tackifier is aliphatic hydrocarbon resins, aromatic modified aliphatic hydrocarbon resins, hydrogenated polycyclopentadiene resins, polycyclopentadiene resins, gum rosins, gum rosin esters, wood rosins, wood rosin esters, tall oil rosins, tall oil rosin esters, polyterpenes, aromatic modified polyterpenes, terpene phenolics, aromatic modified hydrogenated polycyclopentediene resins, hydrogenated aliphatic resin, hydrogenated aliphatic aromatic resins, hydrogentated terpenes and modified terpenes, and hydrogenated rosin esters.

**11.** The process of any of the above claims wherein the tackifier is a hydrogenated, linear, cyclic and/or branched pentadiene.

**12.** The process of any of the above claims wherein the tackifier comprises hydrogenated polycyclopentadiene resin.

**13.** The process of any of the above claims wherein the tackifier comprises a blend of two or more hydrogenated polycyclopentadiene resin.

**14.** A process for spraying ethylene/propylene/butene terpolymers comprising:

selecting a hot melt adhesive composition comprising from 30 to 65 wt-% of a tackifier and an ethylene copolymer having 5 to 40 weight % comonomer, based upon the weight of the polymer; a CDBI of 50% or greater; an MI of 15 dg/min or more; and an Mw/Mn of 4 or less, an optional plasticizer, an optional antioxidant and the terpolymer.

**Patentansprüche**

**1.** Verfahren zum Sprühen von Ethylenhomopolymeren und -copolymeren, bei dem eine Heißschmelzkleberzusammensetzung ausgewählt wird, die 30 bis 65 Gew.% Klebrigmacher und Ethylenpolymer mit 5 bis 40 Gew.% Comonomer, bezogen auf das Gewicht des Copolymers, einem CDBI von 50 % oder größer, einem MI von 15 dg/Min oder mehr und einem $\overline{M}_w/\overline{M}_n$ von 4 oder weniger umfaßt, und der gewählte Heißschmelzklebstoff auf ein Substrat zerstäubt, spiralgesprüht oder schmelzgeblasen wird.

**2.** Verfahren nach Anspruch 1, bei dem das Comonomer ein $C_3$-bis $C_{40}$ lineares, cyclisches oder verzweigtes α-Olefin, vorzugsweise Buten, Hexen und/oder Octen ist, das vorzugsweise in bis zu 40 Gew.% vorhanden ist.

**3.** Verfahren nach einem der obigen Ansprüchen, das ferner ein zweites Polymer umfaßt.

**4.** Verfahren nach Anspruch 3, bei dem das zweite Polymer ein Ethylen/Propylen/Buten-Terpolymer ist.

**5.** Verfahren nach Anspruch 3 oder 4, bei dem das zweite Polymer in bis zu 50 Gew.% vorhanden ist, bezogen auf das Gewicht der ersten und zweiten Polymere.

**6.** Verfahren nach einem der vorhergehenden Ansprüche, bei dem zusätzlich Weichmacher vorhanden ist.

**7.** Verfahren nach Anspruch 6, bei dem der Weichmacher ein Phthalat ist, vorzugsweise Diisoundecylphthalat.

8. Verfahren nach einem der vorhergehenden Ansprüche, bei dem zusätzlich ein Öl oder Wachs vorhanden ist, wobei das Öl vorzugsweise ein olefinisches oder naphthenisches Öl ist.

9. Verfahren nach einem der obigen Ansprüche, bei dem zusätzlich ein Polybutencopolymer mit einem $\overline{M}_n$ von weniger als 2500 vorhanden ist.

10. Verfahren nach einem der vorhergehenden Ansprüche, bei dem der Klebrigmacher aliphatische Kohlenwasserstoffharze, aromatisch modifizierte aliphatische Kohlenwasserstoffharze, hydrierte Polycyclopentadienharze, Polycyclopentadienharze, Naturharze, Naturharzester, Holzharze, Holzharzester, Tallölharze, Tallölharzester, Polyterpene, aromatisch modifizierte Polyterpene, Terpen-Phenolverbindungen, aromatisch modifizierte hydrierte Polycyclopentadienharze, hydrierte aliphatische Harze, hydrierte aliphatische aromatische Harze, hydrierte Terpene und modifizierte Terpene und hydrierte Harzester ist.

11. Verfahren nach einem der vorhergehenden Ansprüche, bei dem der Klebrigmacher hydriertes, lineares, cyclisches und/oder verzweigtes Pentadien ist.

12. Verfahren nach einem der vorhergehenden Ansprüche, bei dem der Klebrigmacher hydriertes Polycyclopentadienharz umfaßt.

13. Verfahren nach einem der vorhergehenden Ansprüche, bei dem der Klebrigmacher ein Gemisch aus zwei oder mehr hydrierten Polycyclopentadienharzen umfaßt.

14. Verfahren zum Sprühen von Ethylen/Propylen/Buten-Terpolymeren, bei dem eine Heißschmelzkleberzusammensetzung ausgewählt wird, die 30 bis 65 Gew.% Klebrigmacher und Ethylencopolymer mit 5 bis 40 Gew.% Comonomer, bezogen auf das Gewicht des Polymers, einem CDBI von 50 % oder größer, einem MI von 15 dg/Min oder mehr und einem $\overline{M}_w/\overline{M}_n$ von 4 oder weniger, optionalen Weichmacher, optionales Antioxidans und das Terpolymer umfaßt.

**Revendications**

1. Procédé pour la pulvérisation d'homopolymères et copolymères d'éthylène, comprenant les étapes consistant à choisir une composition d'adhésif thermofusible comprenant : 30 à 65 % en poids d'un agent d'adhésivité et un polymère d'éthylène comprenant 5 à 40 % en poids de comonomère, sur la base du poids du copolymère ; et ayant un CDBI égal ou supérieur à 50 % ; un IF égal ou supérieur à 15 dg/min ; et un rapport Mw/Mn égal ou inférieur à 4, et
   à atomiser, à pulvériser en spirale ou à souffler en masse fondue l'adhésif thermofusible choisi sur un substrat.

2. Procédé suivant la revendication 1, dans lequel le comonomère est une alpha-oléfine en $C_3$ à $C_{40}$ linéaire, cyclique ou ramifiée, de préférence le butène, l'hexène et/ou l'octène, présente de préférence en une quantité allant jusqu'à 40 % en poids.

3. Procédé suivant l'une quelconque des revendications précédentes, comprenant en outre un second polymère.

4. Procédé suivant la revendication 3, dans lequel le second polymère est un terpolymère éthylène/propylène/butène.

5. Procédé suivant la revendication 3 ou 4, dans lequel le second polymère est présent en une quantité allant jusqu'à 50 pour cent en poids sur la base du poids des premier et second polymères.

6. Procédé suivant l'une quelconque des revendications précédentes, dans lequel un plastifiant est en outre présent.

7. Procédé suivant la revendication 6, dans lequel le plastifiant est un phtalate, de préférence le phtalate de diisoundécyle.

8. Procédé suivant l'une quelconque des revendications précédentes, dans lequel une huile ou cire est en outre présente, l'huile étant de préférence une huile oléfinique ou naphténique.

9. Procédé suivant l'une quelconque des revendications précédentes, dans lequel un copolymère de polybutène ayant une valeur de Mn inférieure à 2500 est en outre présent.

10. Procédé suivant l'une quelconque des revendications précédentes, dans lequel l'agent d'adhésivité est choisi entre des résines hydrocarbonées aliphatiques, des résines hydrocarbonées aliphatiques à modification aromatique, des résines de polycyclopentadiène hydrogénées, des résines de polycyclopentadiène, des gommes-résines, des esters de gomme-résines, des résines de bois, des esters de résines de bois, des résines du tallôl, des esters de résines du tallôl, des polyterpènes, des polyterpènes à modification aromatique, des résines phénoliques terpéniques, des résines de polycyclopentadiène hydrogénées à modification aromatique, des résines aliphatiques hydrogénées, des résines aliphatiques-aromatiques hydrogénées, des terpènes hydrogénés et des terpènes modifiés ainsi que des esters de colophane hydrogénés.

11. Procédé suivant l'une quelconque des revendications précédentes, dans lequel l'agent d'adhésivité est un pentadiène hydrogéné linéaire, cyclique et/ou ramifié.

12. Procédé suivant l'une quelconque des revendications précédentes, dans lequel l'agent d'adhésivité comprend une résine de polycyclopentadiène hydrogénée.

13. Procédé suivant l'une quelconque des revendications précédentes, dans lequel l'agent d'adhésivité comprend un mélange de deux ou plus de deux résines de polycyclopentadiène hydrogénées.

14. Procédé pour la pulvérisation de terpolymères éthylène/propylène/butène, comprenant les étapes consistant :
à choisir une composition d'adhésif thermofusible comprenant 30 à 65 % en poids d'un agent d'adhésivité et un copolymère d'éthylène comprenant 5 à 40 % en poids de comonomère, sur la base du poids du polymère ; et ayant un CDBI égal ou supérieur à 50 % ; un IF égal ou supérieur à 15 dg/min ; et un rapport Mw/Mn égal ou inférieur à 4 ; un plastifiant facultatif, un anti-oxydant facultatif et le terpolymère.